# EUROPÄISCHE PATENTSCHRIFT

(11) **EP 0 983 483 B1**
(45) Veröffentlichungstag und Bekanntmachung des Hinweises auf die Patenterteilung: **07.08.2002**
(21) Anmeldenummer: 98934796.8
(22) Anmeldetag: 26.05.1998
(51) Int. Cl.: G01B 11/30, G01B 11/24

(54) **INTERFEROMETRISCHE MESSVORRICHTUNG**
INTERFEROMETRIC MEASURING DEVICE
DISPOSITIF DE MESURE INTERFEROMETRIQUE

(30) Priorität: 26.05.1997 DE 19721884
(43) Veröffentlichungstag der Anmeldung: 08.03.2000
(73) Patentinhaber: ROBERT BOSCH GMBH, 70442 Stuttgart (DE)
(72) Erfinder: DRABAREK, Pawel, D-75233 Tiefenbronn (DE)
(86) Internationale Anmeldenummer: DE9801435
(87) Internationale Veröffentlichungsnummer: WO9854542

(56) Entgegenhaltungen:
- EP-A- 0 342 289
- US-A- 3 982 835

## Beschreibung

### Stand der Technik

Die Erfindung bezieht sich auf eine interferometrische Meßvorrichtung zur Formvermessung an rauhen Oberflächen eines Meßobjekts mit einer Strahlungserzeugungseinheit, die eine kurzkohärente Strahlung abgibt, mit einem Strahlteiler zum Bilden eines Referenzstrahls, der auf eine Vorrichtung mit einem reflektierenden Element zum periodischen Ändern des Lichtwegs gerichtet ist, und eines Meßstrahls, der auf das Meßobjekt gerichtet ist, mit einem Überlagerungselement, an dem der von dem Meßobjekt kommende Meßstrahl und der von der Vorrichtung kommende Referenzstrahl zur Interferenz gebracht werden, und mit einem Photodetektor, der die interferierte Strahlung aufnimmt.

Eine solche Meßvorrichtung ist beispielsweise aus der EP-A-0 342 289 bekannt.

Eine interferometrische Meßvorrichtung dieser Art ist in der Veröffentlichung T. Dresel, G. Häusler, V. Venzke "Three-Dimensional sensing of rough surfaces by coherence radar", Appl. Opt., Vol. 3, No. 7, vom 01.03.1992 als bekannt ausgewiesen. In dieser Veröffentlichung wird ein Interferometer mit kurzkohärenter Lichtquelle und piezobewegtem Spiegel zur Formvermessung an rauhen Oberflächen vorgeschlagen. In der Meßvorrichtung wird ein erster Teilstrahl in Form einer Lichtwelle, die von einem Meßobjekt zurückgestrahlt ist, mit einem zweiten Teilstrahl in Form einer Referenzwelle überlagert. Die beiden Lichtwellen haben eine sehr kurze Kohärenzlänge (einige µm), so daß der Interferenzkontrast ein Maximum erreicht, wenn die optische Wegdifferenz null ist. Zum Ändern des Lichtwegs der Referenzwelle ist ein reflektierendes Element in Form eines piezobewegten Spiegels vorgesehen. Durch den Vergleich der Lage des piezobewegten Spiegels mit der Zeit des Auftretens des Interferenzmaximums, läßt sich der Abstand zum Meßobjekt bestimmen. Die genaue Erfassung der Lage des piezobewegten Spiegels ist relativ aufwendig.

### Vorteile der Erfindung

Der Erfindung liegt die Aufgabe zugrunde, eine interferometrische Meßvorrichtung der eingangs genannten Art bereitzustellen, bei der der Aufbau vereinfacht und die Meßgenauigkeit erhöht ist.

Diese Aufgabe wird mit den Merkmalen des Anspruchs 1 gelöst. Hiernach ist also vorgesehen, daß die Vorrichtung zum Ändern des Lichtwegs eine im Strahlengang angeordnete parallelverschiebende Anordnung und dahinter ortsfest angeordnet das reflektierende Element aufweist und daß im Strahlengang des Referenzstrahls vor der parallelverschiebenden Anordnung ein Kompensationsgitter angeordnet ist, an dem der Referenzstrahl sowohl vor als auch nach dem Durchgang durch die parallelverschiebende Anordnung gebeugt wird. Durch die in dem Strahlengang angeordnete parallelverschiebende Anordnung und das dahinter ortsfest angeordnete reflektierende Element kommt die Meßvorrichtung ohne jegliches mechanisch bewegtes Teil aus, so daß die Meßempfindlichkeit gesteigert und mechanische Störeinflüsse ausgeschaltet werden.

Durch das Kompensationsgitter werden zudem optische Störeinflüsse in Form einer Winkeldispersion und einer räumlichen Dekohärenz der Wellenfront beseitigt. Dadurch können relativ breitbandige Lichtquellen verwendet werden, wodurch die Auflösung des Meßsystems gesteigert wird. Bei relativ einfachem Aufbau wird somit eine hohe Meßgenauigkeit erzielbar.

Ist vorgesehen, daß die parallelverschiebende Anordnung eine im Strahlengang angeordnete akustooptische Deflektoreinrichtung aufweist, daß das reflektierende Element als Reflexionsgitter ausgebildet ist und daß die Deflektoreinrichtung frequenzmoduliert angesteuert ist und in bezug auf den ankommenden Referenzstrahl sowie auf das Reflexionsgitter derart angeordnet ist, daß der zu dem Überlagerungselement geführte Referenzstrahl durch seine Ablenkung in der Deflektoreinrichtung die Änderung seines Lichtwegs erfährt, so kann der Lichtweg in genau definierter Weise einfach verändert und das Interferenzmaximum in Abhängigkeit des Lichtwegs eindeutig bestimmt werden.

Eine vorteilhafte Maßnahme zur Beseitigung der Winkeldispersion und der räumlichen Dekohärenz der Wellenfront besteht darin, daß die Gitterkonstante des Kompensationgitters zweimal so groß ist wie die Gitterkonstante des Reflexionsgitters.

Ist vorgesehen, daß das Kompensationsgitter und das Reflexionsgitter parallel zueinander anageordnet sind, so wird die räumliche Dekohärenz kompensiert.

Ein einfacher Aufbau der Meßvorrichtung, die zur Steigerung der Meßgenauigkeit beiträgt, besteht darin, daß das Kompensationsgitter reflektierend ausgebildet ist, daß im Strahlengang des Referenzstrahls zwischen dem Strahlteiler und dem kompensationsgitter ein Spiegel angeordnet ist, mit dem der Referenzstrahl auf dem Hinweg auf das Kompensationsgitter und auf seinem Rückweg auf den Strahlteiler gerichtet ist, der gleichzeitig das Überlagerungselement bildet.

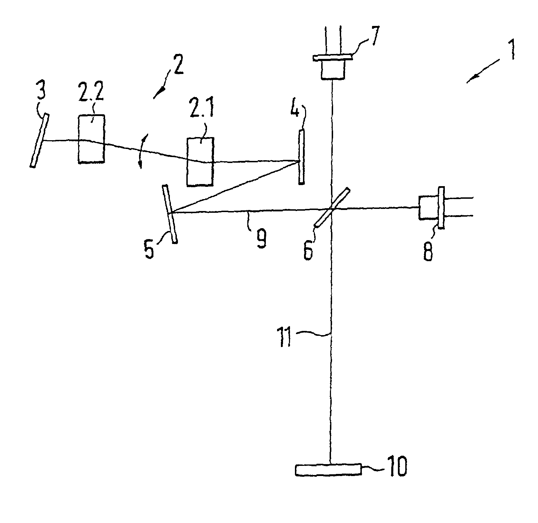

Die Erfindung wird nachfolgend anhand eines Ausführungsbeispiels unter Bezugnahme auf die Zeichnung näher erläutert. Die Figur zeigt eine interferometrische Meßvorrichtung 1 zur Formvermessung eines eine rauhe Oberfläche aufweisenden Meßobjekts 10.

Eine Strahlungserzeugungseinheit in Form einer Lichtquelle 8 gibt eine kurzkohärente Strahlung ab, die mittels eines Strahlteilers 6 in einen Referenzstrahl 9 und einen Meßstrahl 11 aufgeteilt wird. Der Meßstrahl 11 wird auf das Meßobjekt 10 gerichtet und von dort in der Einfallsrichtung zu dem Strahlteifer 6 zurück reflektiert. Der Referenzstrahl 9 gelangt über einen Spiegel 5 und ein z.B. reflektierendes Kompensationsgitter 4 über eine parallelverschiebende Anordnung 2 mit zwei hintereinander geschalteten akustooptischen Deflektoren 2.1, 2.2 auf ein Retrogitter in Form eines Reflexionsgitters 3. Der Referenzstrahl 9 wird von dem Reflexionsgitter 3 in Einfallsrichtung reflektiert und gelangt über die parallelverschiebende Anordnung 2, das Kompensationsgitter 4 und den Spiegel 5 zu dem Strahlteiler 6, wo er mit dem von dem Meßobjekt 10 kommenden Meßstrahl 11 interferiert. Die interferierte Strahlung wird von dem Strahlteiler 6 auf den Photodetektor 7 geführt, der mit einer nicht gezeigten Auswerteschaltung verbunden ist, in der das Interferenzmaximum erfaßt wird, das den gleichen Lichtweg (gleiche Laufzeit) des Referenzstrahls 9 und des Meßstrahls 11 angibt.

Die beiden akustooptischen Deflektoren 2.1, 2.2 werden mittels einer (nicht gezeigten) Treiberschaltung periodisch derart angesteuert, daß der aus dem Deflektor 2.1 austretende Referenzstrahl entsprechend periodisch abgelenkt wird, wie mit dem Doppelpfeil gekennzeichnet. Mit dem weiteren Deflektor 2.2 erfolgt eine Ablenkung des Referenzstrahls 9 in der entgegengesetzten Richtung wie.mit dem ersten Deflektor 2.1, so daß der Referenzstrahl 9 in der Richtung aus dem weiteren Deflektor 2.2 austritt, in der er in den ersten Deflektor 2.1 eintritt, so daß eine sich im Betrag periodisch ändernde Parallelverschiebung ergibt. Der aus dem zweiten Deflektor 2.2 austretende Referenzstrahl 9 fällt auf das Reflexionsgitter 3, das bezüglich des Referenzstrahls 9 schräg ausgerichtet ist. Die Neigung des Reflexionsgitters 3 ist so, daß der von ihm zurückgebeugte Referenzstrahl 9 unabhängig von dem Parallelversatz in die interferometrische Anordnung zu dem Strahlteiler 6 zurückverläuft. Der Interferenzkontrast hat ein Maximum, wenn der Referenzstrahl 9 und der Meßstrahl 11 die gleiche optische Strecke bzw. den gleichen Lichtweg zurücklegen.

Da die beiden akustooptischen Deflektoren 2.1, 2.2 so angeordnet sind, daß die Winkelablenkung des ersten Deflektors 2.1 in dem weiteren Deflektor 2.2 zurückgesetzt und der Referenzstrahl 9 nur parallel verschoben wird, wird der Lichtweg des Referenzstrahls 9 moduliert. Wenn die optische Wegdifferenz des Referenzstrahls 9 und des Meßstrahls 11 null ist, sieht auch der im Strahlengang angeordnete Photodetektor 7 das Interferenzmaximum. Durch den Vergleich des Zeitpunkts des Interferenzmaximums bzw. Signalmaximums des Photodetektors 7 mit der momentanen Frequenz der Treiberschaltung in der Auswerteschaltung läßt sich der Abstand zu dem Meßobjekt 10 genau bestimmen.

Das Kompensationsgitter 4 ist vorzugsweise optisch parallel zu dem Reflexionsgitter 3 ausgerichtet und hat eine Gitterkonstante, die vorzugszweise doppelt so groß wie die Gitterkonstante des Reflexionsgitters 3 ist. Durch die zweimalige Beugung des Referenzstrahls 9 an dem Kompensationsgitter 4 wird die Winkeldispersion und die räumliche Dekohärenz der Wellenfront des Referenzstrahls kompensiert. Aufgrund dieser Kompensation können auch Lichtquellen 8 mit relativ großer Bandbreite verwendet werden, wodurch die Auflösung der Meßvorrichtung 1 begünstigt wird.

## Patentansprüche

1. Interferometrische Meßvorrichtung zur Formvermessung an rauhen Oberflächen eines Meßobjekts (10) mit einer Strahlungserzeugungseinheit (8), die eine kurzkohärente Strahlung abgibt, mit einem Strahlteiler (6) zum Bilden eines Refernzstrahls (9), der auf eine Vorrichtung (2) mit einem reflektierenden Element (3) zum periodischen Ändern des Lichtwegs gerichtet ist, und eines Meßstrahls (11), der auf das Meßobjekt (10) gerichtet ist, mit einem Überlagerungselement (6), an dem der von dem Meßobjekt (10) kommende Meßstrahl (11) und der von der Vorrichtung (2) kommende Referenzstrahl (9) zur Interferenz gebracht werden, und mit einem Photodetektor (7), der die interferierte Strahlung aufnimmt,
**dadurch gekennzeichnet,**
**daß** die Vorrichtung zum Ändern des Lichtwegs eine im Strahlengang angeordnete parallelverschiebende Anordnung (2.1, 2.2) und dahinter ortsfest angeordnet das reflektierende Element (3) aufweist und
**daß** im Strahlengang des Referenzstrahls (9) vor der parallelverschiebenden Anordnung (2.1, 2.2) ein Kompensationsgitter (4) angeordnet ist, an dem der Referenzstrahl (9) sowohl vor als auch nach dem Durchgang durch die paralleiverschiebende Anordnung (2.1, 2.2) gebeugt wird.

2. Meßvorrichtung nach Anspruch 1,
**dadurch gekennzeichnet,**
**daß** die parallelverschiebende Anordnung eine im Strahlengang angeordnete akustooptische Deflektoreinrichtung (2.1, 2.2) aufweist,
**daß** das reflektierende Element als Reflexionsgitter (3) ausgebildet ist und
**daß** die Deflektoreinrichtung (2.1,2.2) frequenzmoduliert angesteuert ist und in bezug auf den ankommenden Referenzstrahl (9) sowie auf das Reflexionsgitter (3) derart angeordnet ist, daß der zu dem Überlagerungselement geführte Referenzstrahl (9) durch seine Ablenkung in der Deflektoreinrichtung (2.1, 2.2) die Änderung seines Lichtwegs erfährt.

3. Meßvorrichtung nach Anspruch 2,
**dadurch gekennzeichnet,**
**daß** die Gitterkonstante des Kompensationsgitters (4) zweimal so groß ist wie die Gitterkonstante des Reflexionsgitters (3).

4. Meßvorrichtung nach Anspruch 2 oder 3,
**dadurch gekennzeichnet,**
**daß** das Komepnsationsgitter (4) und das Reflexionsgitter (3) parallel zueinander anageordnet sind.

5. Meßvorrichtung nach einem der vorhergehenden Ansprüche,
**dadurch gekennzeichnet,**
**daß** das Kompensationsgitter (4) reflektierend ausgebildet ist,
**daß** im Strahlengang des Referenzstrahls (9) zwischen dem Strahlteiler (6) und dem Kompensationsgitter (4) ein Spiegel (5) angeordnet ist, mit dem der Referenzstrahl (9) auf dem Hinweg auf das Kompensationsgitter (4) und auf seinem Rückweg auf den Strahlteiler (6) gerichtet ist, der gleichzeitig das Überlagerungselement bildet.

## Claims

1. Interferrometric measurement apparatus for shape measurement on rough surfaces of a measurement object (10), having a radiation production unit (8) which emits short-coherent radiation, having a beam splitter (6) for forming a reference beam (9) which is directed at an apparatus (2) with a reflective element (3) for periodically changing the light path, and of a measurement beam (11) which is directed at the measurement object (10), having a superimposition element (6) with which the measurement beam (11) coming from the measurement object (10) and the reference beam (9) coming from the apparatus (2) are caused to interfere, and having a photodetector (7) which records the interfering radiation,
**characterized**
**in that** the device for changing the light path has a parallel-shifting arrangement (2.1, 2.2), which is arranged in the beam path and, arranged in a fixed position behind it, the reflective element (3), and
**in that** a compensation grating (4) is arranged in the beam path of the reference beam (9) before the parallel-shifting arrangement (2.1, 2.2), on which the reference beam (9) is diffracted both before and after passing through the parallel-shifting arrangement (2.1, 2.2).

2. Measurement apparatus according to Claim 1,
**characterized**
**in that** the parallel-shifting arrangement has an acousto-optical deflector device (2.1, 2.2) which is arranged in the beam path,
**in that** the reflective element is in the form of a reflection grating (3), and
**in that** the deflector device (2.1, 2.2) is driven such that it is frequency-modulated and, with respect to the incoming reference beam (9) and to the reflection grating (3) is arranged in such a manner that the reference beam (9) which is passed to the superimposition element experiences a change in its light path due to its deflection in the deflector device (2.1, 2.2).

3. Measurement apparatus according to Claim 2,
**characterized**
**in that** the grating constant of the compensation grating (4) is twice as great as the grating constant of the reflection grating (3).

4. Measurement apparatus according to Claim 2 or 3,
**characterized**
**in that** the compensation grating (4) and the reflection grating (3) are arranged parallel to one another.

5. Measurement apparatus according to one of the preceding claims,
**characterized**
**in that** the compensating grating (4) is designed to be reflective,
**in that** a mirror (5) is arranged in the beam path of the reference beam (9) between the beam splitter (6) and the compensation grating (4), by means of which the reference beam (9) is directed on its forward path onto the compensation grating (4) and on its return path onto the beam splitter (6), which at the same time forms the superimposition element.

## Revendications

1. Dispositif de mesure interférométrique pour une mesure de forme d'une surface rugueuse d'un objet de mesure (10) comprenant une unité générant un faisceau (8) émettant un faisceau cohérent court, ur diviseur de faisceau (6) pour former un faisceau de référence (9) dirigé sur un dispositif (2) ayant un élément réfléchissant (3) pour modifies périodiquement le chemin lumineux, et un faisceau de référence (11) dirigé sur l'objet de mesure (10), un élément de combinaison (16) recevant le faisceau de mesure (11) venant de l'objet (10) mesuré et le faisceau de référence (9) venant du dispositif (2) pour les faire interférer, ainsi qu'un photodétecteur (7) qui reçoit le rayonnement d'interférence,
**caractérisé en ce que**
le dispositif pour modifier le chemin optique comprend un dispositif (2.1, 2.2) de décalage parallèle installé dans le chemin du faisceau et derrière celui-ci, de manière fixe, l'élément réfléchissant (3), et
dans le chemin du faisceau de référence (9) devant le dispositif de décalage parallèle (2.1, 2.2) il y a un réseau de compensation (4) qui difracte le faisceau de référence (9) à la fois avant et après son passage dans le dispositif de décalage parallèle (2.1, 2.2).

2. Dispositif de mesure selon la revendication 1,
**caractérisé en ce que**
le dispositif de décalage parallèle comporte une installation de déflection acoustico-optique (2.1, 2.2) installée dans le trajet du faisceau,
l'élément réfléchissant est réalisé sous la forme d'un réseau de réflexion (3), et
l'installation déflectrice (2.1, 2.2) est commandée en modulation de fréquence et est installée par rapport au faisceau de référence (9), incident et par rapport au réseau de réflexion (3) de façon que le faisceau de référence (9) conduit vers l'élément de combinaison subisse une modification de son chemin optique par déviation dans l'installation déflectrice (2.1, 2.2).

3. Dispositif de mesure selon la revendication 2,
**caractérisé en ce que**
la constante du réseau de compensation (4) est double de la constante du réseau de réflexion (3).

4. Dispositif de mesure selon les revendications 2 ou 3,
**caractérisé en ce que**
le réseau de compensation (4) et le réseau de réflexion (3) sont parallèles.

5. Installation de mesure selon l'une des revendications précédentes,
**caractérisée en ce que**
le réseau de compensation (4) est réfléchissant,
le chemin du faisceau de référence (9) entre le diviseur de faisceau (6) et le réseau de compensation (4) comporte un miroir (5) qui dirige le faisceau de référence (9) à l'aller sur le réseau de compensation (4) et chemin au retour sur le diviseur de faisceau (6), celui-ci constituant en même temps l'élément de combinaison.
